# EUROPÄISCHE PATENTSCHRIFT

(11) **EP 3 980 641 B1**
(45) Veröffentlichungstag und Bekanntmachung des Hinweises auf die Patenterteilung: **12.02.2025**
(21) Anmeldenummer: 20724105.0
(22) Anmeldetag: 06.05.2020
(51) Int. Cl.: F02M 26/66, F02M 26/67, F02M 26/68, F16K 15/02, F16K 15/06, F02M 26/59, F02M 26/61

(54) **VENTILEINRICHTUNG**
VALVE ARRANGEMENT
AGENCEMENT DE SOUPAPE

(30) Priorität: 07.06.2019 DE 102019115633
(43) Veröffentlichungstag der Anmeldung: 13.04.2022
(73) Patentinhaber: ElringKlinger AG, 72581 Dettingen/Erms (DE)
(72) Erfinder: ROTH, Philipp, 72581 Dettingen/Erms (DE); KOLASINSKI, Wojtek, 72581 Dettingen/Erms (DE)
(74) Vertreter: Schmidt, Axel
(86) Internationale Anmeldenummer: PCT/EP2020/062559
(87) Internationale Veröffentlichungsnummer: WO 2020/244875

(56) Entgegenhaltungen:
- DE-A1- 102010 004 778
- DE-A1- 19 830 230
- DE-C- 967 300
- DE-U1- 202007 004 323
- FR-A1- 3 071 027

## Beschreibung

Die vorliegende Erfindung betrifft eine Ventileinrichtung für eine Abgas-Rückführung in einem Abgasstrang eines Kraftfahrzeugs, das mit einer Verbrennungskraftmaschine angetrieben ist.

In aktuellen Verbrennungsmotoren werden die entstehenden Abgase zum Teil wieder einem Verbrennungsprozess in der Verbrennungskraftmaschine zugeführt, um den Schadstoffausstoß zu reduzieren. Aufgrund von durch den Verbrennungsprozess entstehenden Druckpulsationen kann ein Druck auf einer Abgasrückführungsseite kurzfristig niedriger sein, als der Druck auf einer Ladeluftseite. Dieser Druckunterschied würde zu einem ungewollten Rückstrom von Abgas in den Abgasrückführbereich führen. Um dies zu verhindern werden Ventileinrichtungen als sog. AGR-Rückschlagventile eingesetzt, welche sich nur in Richtung der Ladeluftseite öffnen können. Aus dem Stand der Technik ist u.a. aus der DE 199 53 198 A1 eine Ventileinrichtung bekannt, die zu dem genannten Zweck als Rückschlagventil einsetzbar ist. Auch eine Ventileinrichtung gemäß der DE 10 2005 059 120 B3 umfasst eine im Wesentlichen rechteckige Flanschgeometrie. Dabei ist bekannt, derartige Rückschlagventile in unterschiedlichen Bauformen zu realisieren, z.B. aus modular gestapelten und miteinander verschraubten oder verschweißten Blechlagen oder aus einem Gusskörper mit daran fixierten Blechlagen. Dieser Aufbau aus einem Gusskörper mit Blechlagen bedingt neben einer Vielzahl von Bauteilen aber einen sehr großen Bauraum sowie ein hohes Gesamtgewicht. Andere Ventileinrichtungen sind aus der DE19830230A1 oder der DE202007004323U1 bekannt.

Ein Problem bei bekannten AGR-Rückschlagventilen besteht darin, dass bei einer kleiner werdenden Ventilgeometrie der entstehende Druckverlust funktionell nicht mehr zulässig ist.

Außerdem ist das modulare Ventildesign im Hinblick auf die Herstellbarkeit und Dauerhaltbarkeit eingeschränkt.

Es besteht daher für die vorliegende Erfindung die Aufgabe, eine als AGR-Rückschlagventil einsetzbare Ventileinrichtung zu schaffen, bei der auch bei kleinen Ventil-Geometrien ein Druckverlust gegenüber bekannten Ventil-Bauformen verringert ist.

Diese Aufgabe wird erfindungsgemäß durch die Merkmale von Anspruch 1 oder durch die Merkmale von Anspruch 14 dadurch gelöst, dass die Ventileinrichtung einen Ventilkörper umfasst, der als separates Teil ausgebildet ist und Pilz- oder Schirm-förmig ausgeformt ist, und in einem gasdurchströmten Bereich in einer Trägerplatte axial geführt ist. Der Ventilkörper liegt in einer geschlossenen Stellung mit seinem Schirm auf der Trägerplatte den gasdurchströmten Bereich abdichtend auf und weist einen Endanschlag für eine geöffnete Stellung auf, in der der gasdurchströmte Bereich maximal freigegeben ist. Eine erfindungsgemäße Ventileinrichtung umfasst somit einen beweglichen Ventilkörper, der im Wesentlichen die Form eines Pilz-Fruchtkörpers oder eines aufgespannten Stock-Schirms aufweist. Der Fruchtkörper eines klassischen Pilzes besteht aus Stiel und Hut, ein Stockschirm bei vergleichbarer äußerer Struktur aus einem Schirmdach und einem Stock. In beiden bildlichen Vergleichen dienen Hut und Schirmdach augenfällig der Abdichtung in einer geschlossenen Endstellung des Ventils an oder auf der Trägerplatte zur Abdichtung des gasdurchströmten Bereichs. Durch Abheben des in axialer Richtung entlang des Stils oder Stücks frei beweglichen Ventilkörpers von der Trägerplatte wird ein Öffnen des Ventils durch Freigabe des gasdurchströmten Bereichs in der Trägerplatte erreicht.

Bei der vorgeschlagenen Lösung ist der Ventilkörper mit seiner besonderen Außenform in seiner Bewegung zwischen zwei Endpunkten geführt. Es ergibt sich ein kompaktes Ventildesign, das deutlich größere Querschnitte ermöglicht und somit den auftretenden Druckverlust senkt. Da diese Bauform kein Rückstellelement z.B. in Form einer Feder oder gar endseitig eingespannten Blattfeder besitzt, verbessert sich hierdurch ein Ansprechverhalten bei Änderungen der Druckverhältnisse diesseits und jenseits des Ventilkörpers, da z.B. keine Federkräfte überwunden werden müssen. Der auftretende Lade- bzw. Abgasdruck hält somit das Ventil entweder geschlossen oder geöffnet. Dadurch kann das Ventil bei deutlich geringeren DruckUnterschieden geöffnet oder geschlossen werden. Eine erfindungsgemäße Ventileinrichtung ist sehr kompakt aufgebaut und kann daher bei sehr engen und vorteilhafterweise auch nicht rechteckförmigen Bauräumen eingesetzt werden.

Vorteilhafte Weiterbildungen sind Gegenstand der jeweiligen Unteransprüche. Demnach bildet eine Stopper-Lage den Endanschlag für den Pilz- oder Schirm-förmigen Ventilkörper in der geöffneten Stellung. Trägerplatte und Stopperlage bilden einen Stapel aus einfach herstellbaren Blechabschnitten, zwischen denen der Ventilkörper beweglich ist.

Vorteilhafterweise ist der Pilz- oder Schirm-förmige Körper über einen Stab in einer Ausnehmung der Trägerplatte und/oder der Stopperlage geführt. Diese Führung in der Trägerplatte und/oder der Stopperlage erfolgt durch verschiebliche Lagerung des Stiels des Pilzes bzw. des Stocks des Schirms als Stab in der Trägerplatte und/oder der Stopperlage. Ein solcher Stab weist eine gerade Länge in einer Bewegungsrichtung des Ventilkörpers auf, die in einem entsprechend bemessenen Loch zur axialen Führung ausreichend ist.

In einer bevorzugten Ausführungsform der Erfindung weisen die Trägerplatte und die Stopperlage mindestens eine Ausnehmung für durchströmende Abgase sowie eine Gleitlagerung als Führung des Stabs des Ventilkörpers auf. Damit sind einfach gestaltete Bauformen der Trägerplatte sowie der Stopperlage realisierbar, die insbesondere als einfaches Stanz- oder Laserteile herstellbar sind. In einer Ausführungsform der Erfindung bildet eine mit mindestens einer Durchströmöffnungen versehene und dreidimensional verformte Stopper-Lage den Endanschlag für den Pilz- oder Schirm-förmigen Ventilkörper. Die Stopper-Lage definiert damit einen maximalen Ventilhub.

In einer vorteilhaften Weiterbildung der Erfindung ist die mindestens eine Ausnehmung in der Trägerplatte und in der Stopper-Lage in Strömungsrichtung der Abgase kongruent ausgebildet und fluchtend ausgerichtet. Somit werden Verwirbelungen und Umlenkungen im Bereich der Ausnehmungen minimiert, welche sich sonst negativ in Form eines erhöhten Druckverlusts auswirken.

In einer Weiterbildung der Erfindung weisen die Trägerplatte und die Stopper-Lage Ausnehmungen entsprechend einem Schraubenloch zur Verschraubung der endseitigen Flansche auf. Damit ist die beschriebene Anordnung direkt mit Standard-Flanschen kombinierbar und kann leicht dauerhaft abdichtend verschraubt werden.

Vorzugsweise sind Stopper-Lage und Trägerplatte mindestens teilweise miteinander kraft-, form- und/oder stoffschlüssig verbunden. Es ergibt sich so eine erfindungsgemäße Ventileinrichtung als leicht handhabbare sowie einfach einbaubare Einheit mit dem beweglichen Ventilkörper zwischen der fest mit der Stopper-Lage zusammengefügten Trägerplatte. Diese Verbindung zwischen Stopper-Lage und Trägerplatte liegt vorzugsweise außerhalb einer Dichtungslage, wie nachfolgend noch anhand eines Ausführungsbeispiels dargestellt wird.

Gemäß einer besonders vorteilhaften Ausführungsform der Erfindung sind die Stopper-Lage und die Trägerplatte jeweils als Dichtungen ausgebildet. Diese Dichtungen sorgen zwischen den Flanschen einer Rohrverbindungsstelle oder einer Fixierung eines Rohrs an einem Gehäuseteil dauerhaft und sicher für eine erforderliche Dichtigkeit auch in Temperaturbereichen von über 200°C.

In einer Ausführungsform der Erfindung ist eine Führung des Ventilkörpers als Gleitlagerung in Form einer Hülse ausgebildet, in einem Ausführungsbeispiel der Erfindung sind also für die Führungen zwei Hülsen vorgesehen. Dabei ist dem Fachmann bekannt, dass eine Hülse unter Berücksichtigung bekannter Materialpaarungen einfach und zuverlässig in einer Ausnehmung dauerhaft fixierbar ist. Statt einer Verwendung von Hülsen in Form separater Bauteile kann auch eine einstoffliche Lösung gewählt werden, indem z.B. ein anstehendes Material des betreffenden Blechteils als Führung umgelegt und/oder tiefgezogen wird. Beide Maßnahmen können eine axiale Führung für den Stab des Ventilkörpers bereitstellen. Dem Fachmann bekannte reibungsmindernde Beschichtungen sind in diesem Bereich leicht einbringbar, so dass mindestens ein zusätzliches Bauteil eingespart werden kann.

In einer Weiterbildung der Erfindung weist die Ventileinrichtung mindestens eine zusätzliche Dichtung auf, die für eine Verbesserung der Dichtungsfunktionalität zwischen den Flanschen sorgt. Diese zusätzliche Dichtung ist dazu vorzugsweise als bis in hohe Temperaturbereiche hinein und auch bei großen Temperaturschwankungen sehr gut abdichtende Metall-Sicken-Dichtung ausgeführt.

Über alle beschriebenen Weiterbildungen der Erfindung hinweg ist der Pilz- oder Schirm-förmige Ventilkörper selber in einem Stück als Spritzguss- oder Form-, Fräs- oder Drehteil ausgebildet. Der Ventilkörper besteht aus einem thermisch belastbaren Material, wie z.B. einem Metall oder Kunststoff.

Gemäß Anspruch 14 ist der Pilz- bzw. Schirm-förmige Ventilkörper mit einem Stab in Form eines hohlen, zylindrischen Stiels versehen, der an den Schirm angrenzend Öffnungen aufweist, die um einen Umfang des Stabs vorzugsweise gleichmäßig so geformt und verteilt angeordnet sind, dass diese Öffnungen in einer zweiten Endpunktlage durch die Gleithülse verschlossen sind und der Schirm abdichtend auf der Trägerplatte aufliegend angeordnet ist. In einer ersten Endpunktlage bzw. geöffneten Endstellung sind diese Öffnungen freigegeben.

Als Alternative zur Bildung der zweiten Endpunktlage der Ventileinrichtung durch eine Stopperlage weist der Stab des Ventilkörpers mindestens eine Rastnase oder einen nach außen gerichteten, z.B. durch Bördeln oder ähnlich Materialumformung gebildeten Kragen an einem freien Ende auf. Die Rastnase oder der Kragen definiert mit einer axialen Führung zusammen dann einen maximalen Hub des Ventilkörpers in der zweiten Endpunktlage.

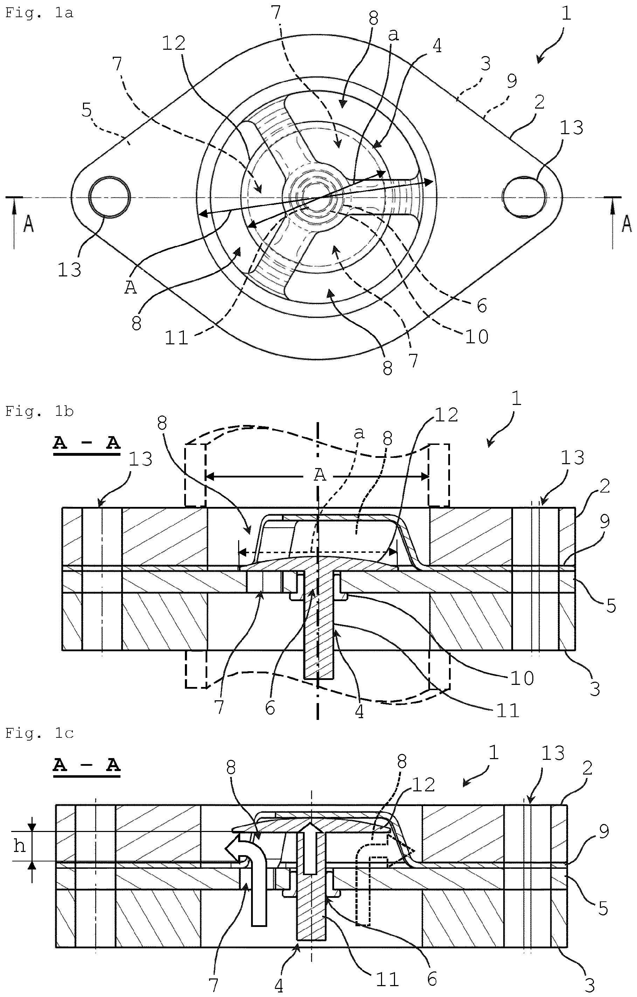

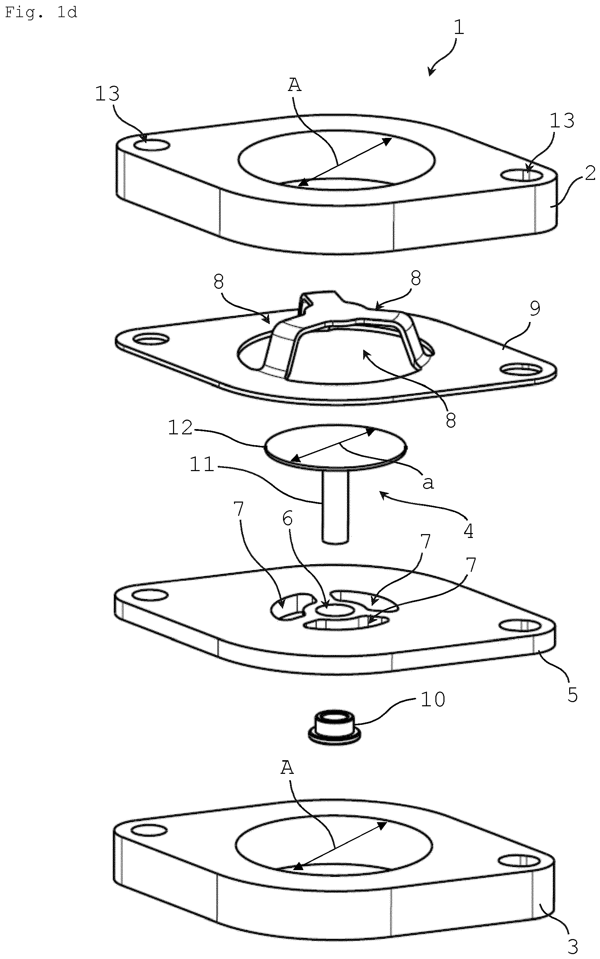

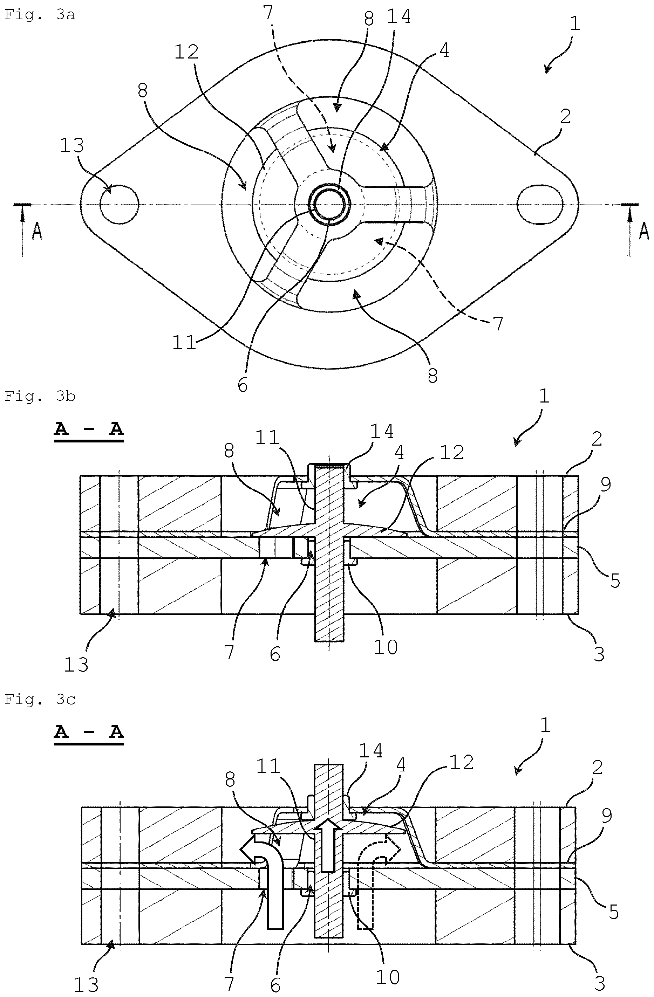

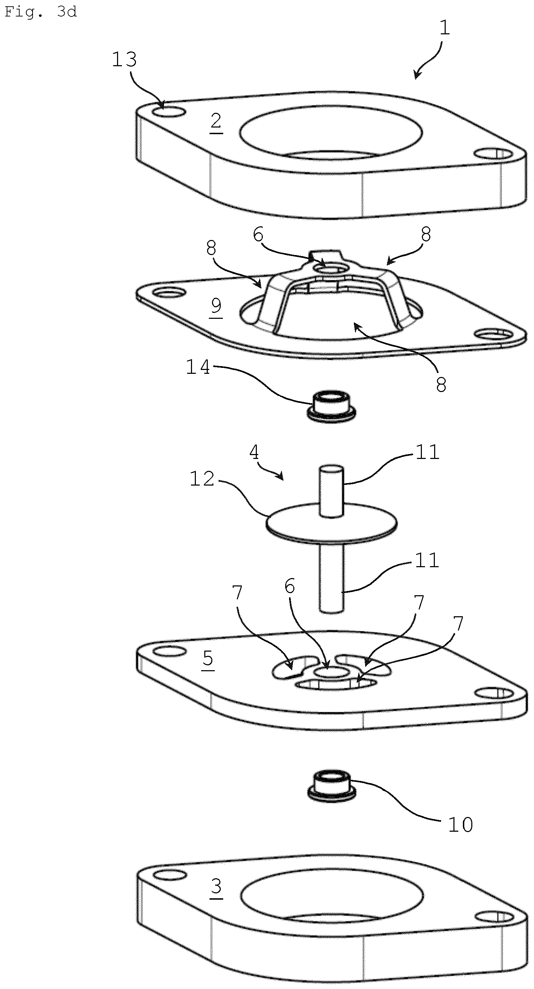

Nachfolgend werden weitere Merkmale und Vorteile erfindungsgemäßer Ausführungsformen unter Bezugnahme auf Ausführungsbeispiele anhand der Zeichnung näher erläutert. Darin zeigen in schematischer Darstellung:
Figuren 1a bis 1d:
   eine Draufsicht auf ein erstes Ausführungsbeispiel einer Ventileinrichtung mit Schnittdarstellungen in einer Ebene A-A bei geöffneter und bei geschlossener Ventileinrichtung sowie eine Explosionsdarstellung;
Figuren 2a bis 2d:
   eine Darstellung eines zweiten Ausführungsbeispiels einer Ventileinrichtung analog der Figuren 1a bis 1d;
Figuren 3a bis 3d:
   eine Darstellung eines dritten Ausführungsbeispiels einer Ventileinrichtung analog der Figuren 1a bis 1d;
Figuren 4a bis 4e:
   eine Darstellung eines vierten Ausführungsbeispiels einer Ventileinrichtung analog der Figuren 3a bis 3d sowie einer Schnittdarstellung zur Darstellung einer Dichtungsfunktionalität dieses Aufbaus aus Stopper-Lage, Trägerplatte und zusätzlichen Sickendichtungen zur Abdichtung zwischen den Flanschen;

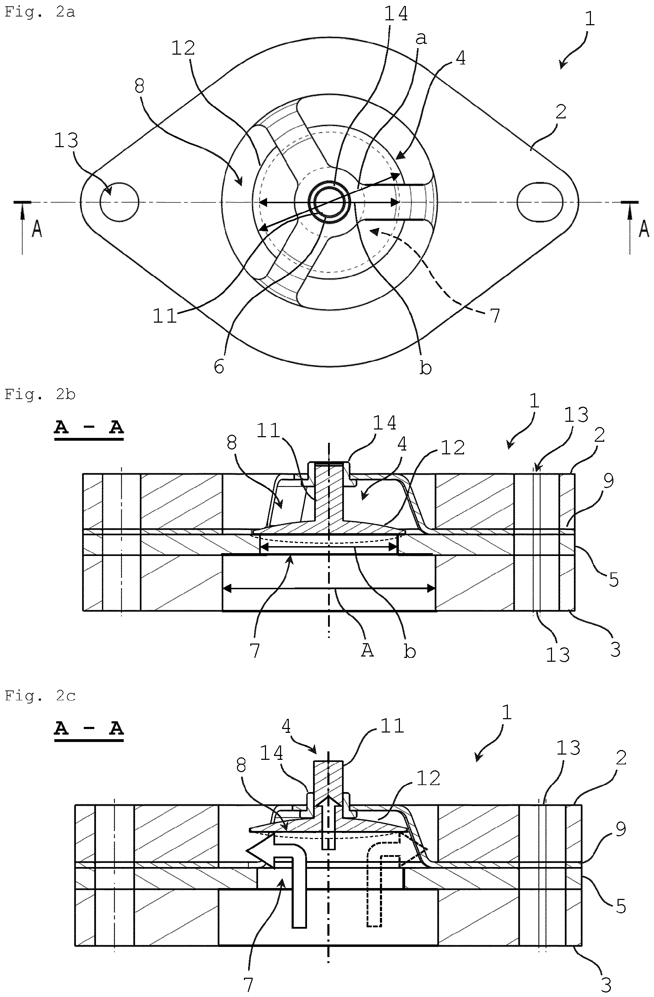

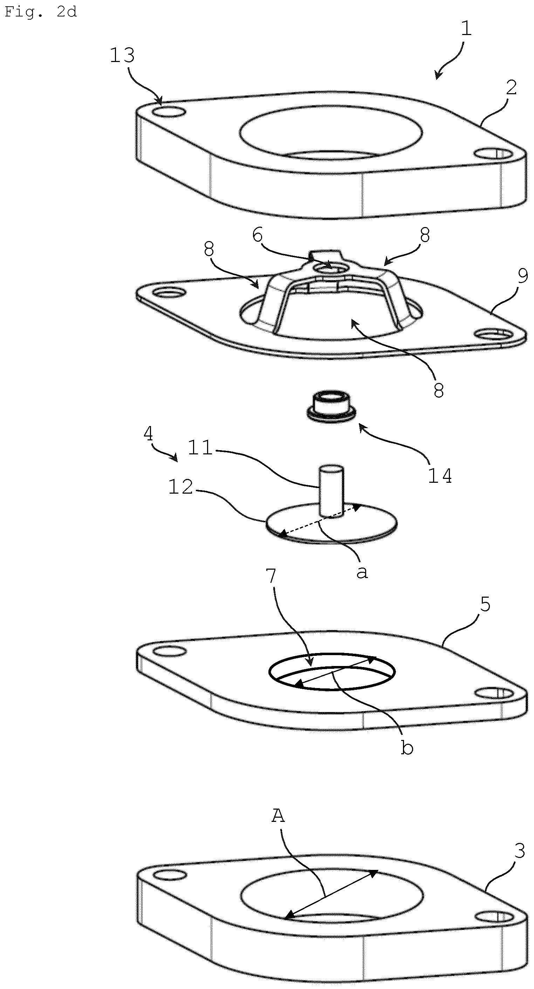

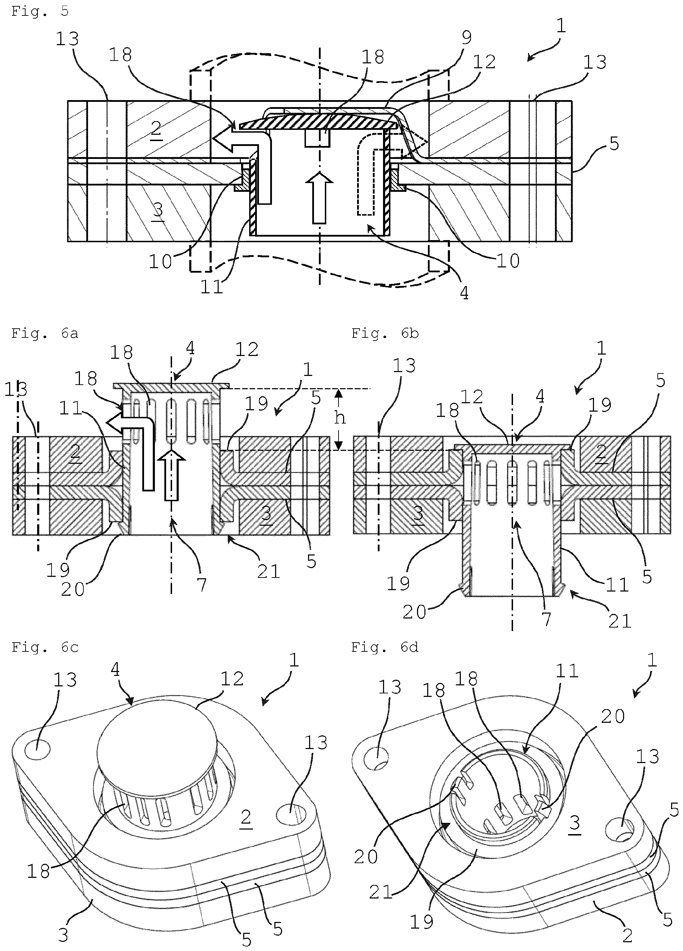

Figur 5: eine Darstellung eines fünften Ausführungsbeispiels einer Ventileinrichtung analog der Abbildungen der Figuren 1c und 2c und
Figuren 6a bis 6e:
   eine Abwandlung des Ausführungsbeispiels von Figur 5 in Schnittdarstellungen, perspektivischen Ansichten von oben und von unten und einer Explosionsdarstellung.

Über die verschiedenen Abbildungen und Ausführungsbeispiele hinweg werden für gleiche Elemente stets die gleichen Bezugszeichen verwendet.

Die Skizze von Figur 1a zeigt eine Draufsicht auf ein erstes Ausführungsbeispiel einer Ventileinrichtung 1, die zwischen zwei Flanschen 2, 3 als Ausschnitt einer nicht weiter dargestellten Abgas-Rückführung im Abgasstrang eines mit einer Verbrennungskraftmaschine angetriebenen Kraftfahrzeugs eingespannt ist. Ein innerer Aufbau wird anhand der Schnittdarstellung in einer Ebene A - A der Figur 1a verdeutlicht, die als Figur 1b die Ventileinrichtung 1 im geschlossenen und Figur 1c in geöffnetem Zustand zeigt. Die Ventileinrichtung 1 weist einen Ventilkörper 4 auf, der als separater rotationssymmetrischer Körper Pilz- oder Schirm-förmig ausgebildet ist. Dieser Ventilkörper 4 ist in einem Bereich einer Trägerplatte 5 in einer Ausnehmung 6 axial zwischen zwei Endpunkten beweglich geführt. Um die Ausnehmung 6 herum sind radial verteilt drei Ausnehmungen 7 vorgesehen, durch die in einer geöffneten Stellung der Ventileinrichtung 1 ein Abgasstrom durch die Ventileinrichtung 1 hindurchströmt, und dazu den Ventilkörper 4 in der dargestellten Weise in eine geöffnete Stellung bringt. In dieser geöffneten Stellung als erstem Endpunkt liegt der Ventilkörper 4 an einem Endanschlag an, der durch eine kappenförmig ausgebildete und mit Durchströmöffnungen 8 versehene Stopper-Lage 9 gebildet ist. In einer geschlossenen Stellung als zweiten Endpunkt liegt der Ventilkörper 4 auf den drei Ausnehmungen 7 bzw. der Trägerplatte 5 abdichtend auf.

Die Ausnehmung 6 in der Trägerplatte 5 ist mit einer Gleithülse 10 versehen, die aus Teflon, Kupfer und/oder Edelstahl bestehen kann. In dieser Gleithülse 10 ist ein Stab 11 des Ventilkörpers 4 axial verschieblich gelagert, so dass die Ausnehmungen 7 als Durchströmöffnungen der Trägerplatte 5 durch das Aufdrücken eines Kopfes 12 des Ventilkörpers 4 auf die Trägerplatte 5 abdichtend verschlossen werden. Die Ventileinrichtung 1 umfasst hier also nur einen aus Kopf 12 und Stab 11 bestehenden, Pilz- oder Schirm-förmig ausgebildeten Ventilkörper 4, der hier über seinen Stab 11 in der Trägerplatte 5 zwischen zwei Endlagen geführt ist. Die Trägerplatte 5 bildet einen Endanschlag für eine geschlossenen Endlage, die kappenförmige Stopper-Lage 9 einen zweiten Endanschlag mit Einstellung einer maximalen Öffnung bzw. eines Ventilhubs h der Ventileinrichtung 1, siehe Figur 1c.

Eine Durchflutung der Ventileinrichtung 1 ist im Vergleich zu bekannten AGR-Rückschlag-Ventilen u.a. dadurch verbessert, dass hier ein freier Rohrquerschnitt A fast vollständig durch den Ventilkörper 4 mit einem Durchmesser a des Kopfes 12 genutzt werden kann, wie in Figur 1b angedeutet. Jenseits der Fläche der Ausnehmung 6 steht von der freien Rohrquerschnittsfläche A auf der Trägerplatte 5 ein großer Anteil zur Bildung von Durchströmöffnungen in Form der Ausnehmungen 7 zur Verfügung. Damit weist eine derartige Ventileinrichtung 1 vorteilhafterweise einen vergleichsweise geringen Durchströmungswiderstand auf.

Die Ventileinrichtung 1 ist zudem als Dichtung ausgebildet, die zwischen den Flanschen 2, 3 dauerhaft abdichtend angeordnet ist. Dazu weisen die Trägerplatte 5 und die Stopper-Lage 9 eine Außenform auf, die der der Standard-Form der Flansche 2, 3 entspricht. Ferner weisen die Trägerplatte 5 und die Stopper-Lage 9 auch Schraubenlöcher 13 auf, die fluchtend in der Linie der Verschraubung der Flansche 2, 3 liegen.

Die Abbildungen der Figuren 2a bis 2d zeigen Darstellungen eines zweiten Ausführungsbeispiels einer Ventileinrichtung analog der Figuren 1a bis 1d, in der nun in der Stopper-Lage 9 eine Führung 14 des Pilz- oder Schirm-förmigen Ventilkörpers 4 vorgesehen ist. Der Ventilkörper 4 stellt durch die Form des Kopfes 12 einen quasi umgeschlagenen Schirm dar. In nicht dargestellter Art und Weise kann auch der Ventilkörper 4 von den Figuren 1a bis 1d um 180° gedreht eingesetzt werden. Ferner kann der Kopf 12 auch innerhalb der tiefgezogenen Struktur der Stopper-Lage 9 eine zusätzliche Führung erfahren.

Die Öffnung 7 in der Trägerplatte 5 kann in nicht weiter dargestellter Weise mit einer Fase versehen sein, durch die eine zusätzliche Selbstzentrierung im Bereich des Kopfes 12 des Ventilkörpers 4 beim Schließen auf der nun einzigen Öffnung 7 erzielt wird. Damit ergibt sich ein Durchmesser b einer einzigen kreisförmigen Ausnehmung in der Trägerplatte 5 als Durchströmöffnung, der unwesentlich kleiner als der Durchmesser a des Kopfes 12 des Ventilkörpers 4 gewählt werden kann, ohne dass hierdurch die Dichtigkeit der Ventileinrichtung 1 beeinträchtigt werden würde, siehe Figur 2b. Folglich zeichnet sich diese Ausführungsform aufgrund der günstigen Strömungsführung durch einen besonders geringen Strömungswiderstand aus.

Die Abbildungen der Figuren 3a bis 3d zeigen Darstellung eines dritten Ausführungsbeispiels einer Ventileinrichtung analog der Figuren 1a bis 1d, in der nun in der Stopper-Lage 9 eine zweite Führung 14 des Pilz- oder Schirm-förmigen Ventilkörpers 4 vorgesehen ist, um eine noch sicherer Führung des Ventilkörpers 4 gewährleisten zu können. Hierzu ist der Stab 11 des Ventilkörpers 4 über den Kopf 12 entsprechend verlängert worden, so dass Führungen in der Form von Gleithülsen 10, 14 eine axiale Führung des Ventilkörpers 4 jederzeit sicherstellen. In diesem Ausführungsbeispiel sind damit in der Stopper-Lage 9 und der Trägerplatte 5 jeweils Führungen für den Stab 11 des Schirmventils 4 vorgesehen. Damit ist der Stab 11 des Ventilkörpers 4 einmal in der Trägerplatte 5 und ein zweites Mal in der Stopper-Lage 9 verschieblich und durch die Gleithülsen 10, 14 bei geringer Reibung geführt. So ist der bewegliche Ventilkörper 4 gegen Verkippen noch zuverlässiger gesichert, als durch nur eine einzige Axialführung allein.

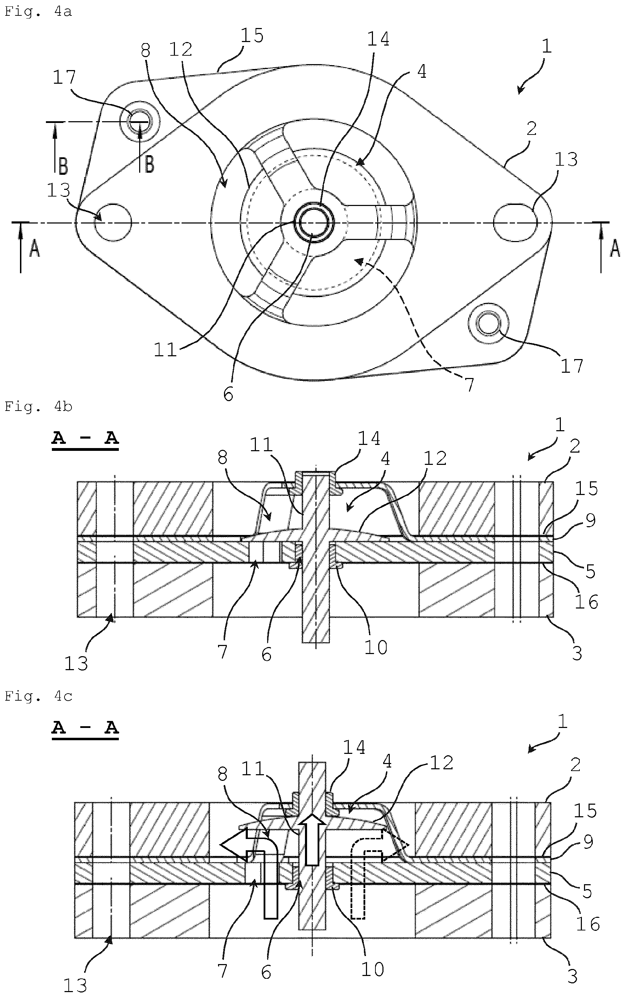

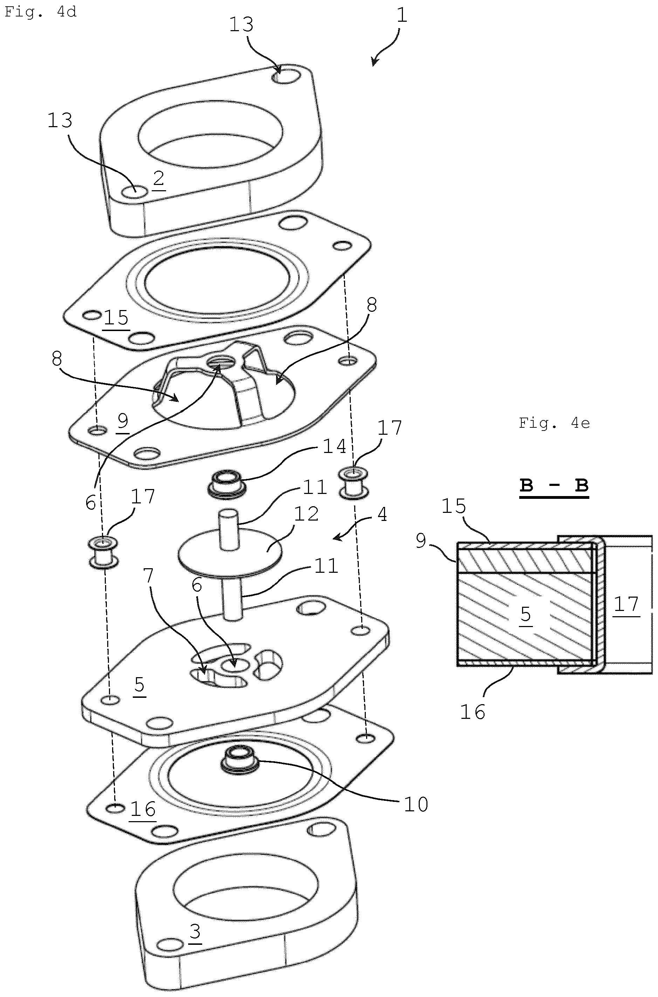

die Abbildungen der Figuren 4a bis 4e zeigen ein viertes Ausführungsbeispiel einer Ventileinrichtung 1 analog der Figuren 2a bis 2d, bei der die Ventileinrichtung 1 mindestens eine zusätzliche Dichtung aufweist. In diesem Ausführungsbeispiel sind zwei zusätzliche Dichtungen 15, 16 anschließend an die Stopper-Lage 9 und die Trägerplatte 5 vorgesehen. Die Dichtungen 15, 16 sind zur Verbesserung der Dichtfunktion der Ventileinrichtung 1 gegenüber den Flanschen 2, 3 vorgesehen und sind in diesem Ausführungsbeispiel als Metall-Sicken-Dichtung ausgeführt.

Zudem sind hier die Stopper-Lage 9 und Trägerplatte 5 über die zwei zusätzlichen Dichtungen 15, 16 miteinander durch Nieten 17 verbunden. Diese Nieten 17 liegen außerhalb eines eigentlichen Dichtungsbereichs und somit auch außerhalb der Flansche 2, 3. Die Schnittdarstellung von Figur 4e zeigt eine Darstellung einer durch diesen Aufbau aus Stopper-Lage 9, Trägerplatte 5 und zusätzlichen Sickendichtungen 15, 16 zwischen den Flanschen 2, 3 verbesserten Dichtungsfunktionalität mit einem geschnittenen Niet 17.

Figur 5 zeigt eine Darstellung eines fünften Ausführungsbeispiels einer Ventileinrichtung 1. Hier ist der Ventilkörper 4 mit einem Stab 11 in Form eines hohlen, zylindrischen Stiels versehen. Der Stab 11 weist an den Kopf bzw. Schirm 12 angrenzend Öffnungen 18 auf, die in diesem Beispiel um den Umfang gleichmäßig verteilt angeordnet sind. Diese Öffnung werden nur dann vollständig freigegeben, wenn der Ventilkörper 4 an den der Stopperlage 9 anliegt, also in der geöffneten Endpunktlage. Im Unterschied zu den vorgehend beschriebenen Ausführungsbeispielen sind hier also in der Trägerplatte 5 keine Durchströmöffnung 8 radial um die Ausnehmung 6 herum verteilt mehr vorgesehen, sondern nur Öffnungen 18. In einer zweiten Endpunktlage liegt der Schirm 12 abdichtend auf der Trägerplatte 5 auf.

Die Abbildungen der Figuren 6a bis 6e stellen eine Abwandlung des Ausführungsbeispiels von Figur 5 dahingehend dar, dass in diesem Beispiel die Trägerplatte 5 doppelt ausgeführt ist und statt der Verwendung einer Gleithülse ein anstehendes Material der Blechteile 5, 5 zur Ausbildung einer axialen Führung 19 spiegelbildlich tiefgezogen worden ist. Aus der Schnittdarstellung von Figur 6a ist ferner erkennbar, dass nun keine Stopperlage 9 mehr zur Definition eines zweiten Endpunktes des Ventilkörpers 4 mehr vorgesehen ist. Stattdessen sind Rastnasen 20 an einem freien Ende 21 des hohlen Stiels 11 vorgesehen, die mit der axialen Führung 19 zusammen einen maximalen Hub h des Ventilkörpers 4 definieren. Figur 6c zeigt den kompakten Aufbau dieses Ausführungsbeispiels in perspektivischer Draufsicht in maximal geöffneter Stellung. Figur 6d zeigt eine zugehörige Ansicht von unten zur besseren Darstellung der hier verwendeten Rastnasen 20 im Zusammenspiel mit der axialen Führung 19. Aus dieser Darstellung wird deutlich, dass eine Verwendung mindestens einer Rastnase 20 an dem freien Ende 21 nicht auf ein Ausführungsbeispiel mit einem einen hohlen Stiel 11 aufweisenden Ventilkörper 4 beschränkt ist. Unter Anwendung einer alternativen Fertigungsmethode kann statt einer Rastnase 20 auch ein außen an dem freien Ende 21 umlaufender Kragen als 2. Endanschlag vorgesehen sein, was hier nicht weiter zeichnerisch dargestellt ist.

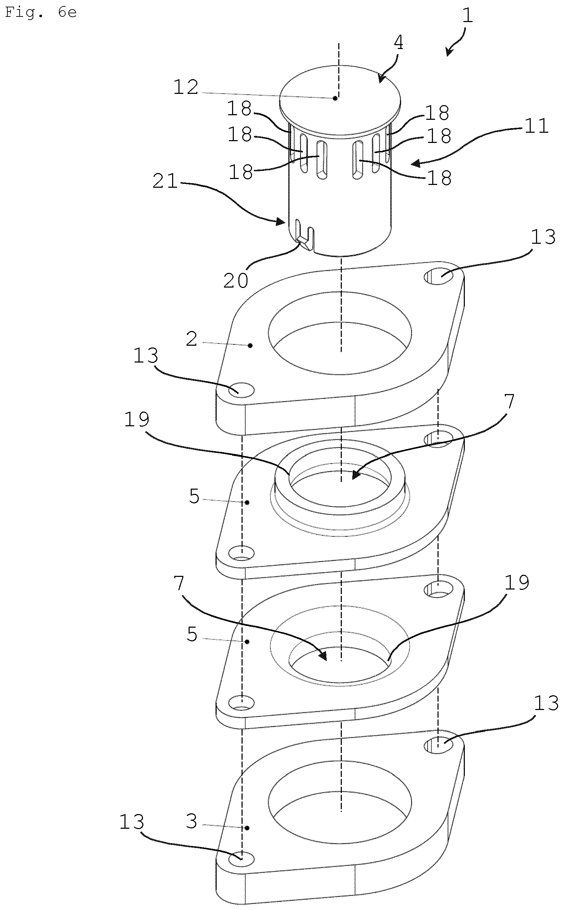

Figur 6e zeigt ergänzend ein Beispiel für einen einfachen Zusammenbau dieses Ausführungsbeispiels in Form einer Explosionsdarstellung. Schon mit dem Einstecken des Ventilkörpers 4 können alle Bestandteile gegeneinander positionierbar fixiert werden, wobei vorstehend angegebene Fixierungen von Bauteilen miteinander zur Vereinfachung eines schnellen und sicheren Einbaus zusätzlich möglich sind, was hier zeichnerisch nicht weiter dargestellt ist.

Der Pilz- bzw. Schirm-förmige Ventilkörper 4 ist mit Stab 11 und Kopf 12 einstückig als Spritzguss- bzw. Form-, Fräs- oder Drehteil ausgebildet, der aus einem bis ca. 300°C thermisch belastbaren Material besteht. Über alle vorstehend beschriebenen Ausführungsbeispiele hinweg schließt sich der Pilz- oder Schirm-förmige Ventilkörper 4 je nach anliegendem Druck selbsttätig und benötigt keine zusätzliche Rückstellkraft, wie sie bei bekannten Vorrichtungen z.B. durch eine elastisch verspannte Feder realisiert werden muss. Auch aufgrund seiner geringen Masse zeichnet sich die beschriebene Ventileinrichtung 1 durch ein rasches Ansprechverhalten aus.

Ferner ist die dargestellte Ventileinrichtung 1 für häufig vorhandene, nicht-rechteck-förmige Geometrien bei sehr guter Platzausnutzung direkt und ohne Anpassung oder zusätzliche Dichtungen im Bereich einer Flanschverbindung anwendbar. Schon aus diesem Grund wurde hier - ohne Beschränkung der Erfindung auf diese Geometrie - ein Rohr mit kreisförmigem freiem Rohrquerschnitt, wie es nach einem Abgaskühler in Abgasanlagen heutiger Kraftfahrzeuge zu finden ist, für die vorstehend beschriebene zeichnerische Darstellung der Ausführungsbeispiele der Erfindung gewählt.

### Bezugszeichenliste

- 1: Ventileinrichtung
- 2: Flansch
- 3: Flansch
- 4: Ventilkörper
- 5: Trägerplatte als Dichtungspartner des Ventilkörpers 4
- 6: Ausnehmung zur Führung des Ventilkörpers 4 in der Trägerplatte 5 / Stopperlage 9
- 7: Durchströmöffnung in der Trägerplatte 5, ggf. radial um die Ausnehmung 6 herum verteilt
- 8: Durchströmöffnung als Ausnehmung in der Stopper-Lage 9
- 9: Stopper-Lage
- 10: Gleithülse in der Trägerplatte 5
- 11: Stab des Ventilkörpers 4
- 12: Kopf des Ventilkörpers 4 / Schirm
- 13: Schraubenloch für eine Flanschverbindung
- 14: Gleithülse als Führung in der Stopper-Lage 9 angeordnet
- 15: Metall-Sicken-Dichtung
- 16: Metall-Sicken-Dichtung
- 17: Niet
- 18: Öffnung im hohlen Stab 11 nahe des Schirms 12
- 19: axiale Führung
- 20: Rastnase
- 21: freies Ende des hohlen Stiels/Stabs 11 des Ventilkörpers 4

- a: Kopf-Durchmesser des Ventilkörpers 4
- A: freie Rohrquerschnittsfläche
- b: Durchmesser einer einzigen kreisförmigen Ausnehmung in der Trägerplatte 5 als Durchströmöffnung
- h: Ventilhub

## Patentansprüche

1. Ventileinrichtung für eine Abgas-Rückführung in einem Abgasstrang eines Kraftfahrzeugs, das mit einer Verbrennungskraftmaschine angetrieben ist, wobei eine Trägerplatte (5) und eine Stopper-Lage (9) Ausnehmungen entsprechend einem Schraubenloch (13) endseitiger Flansche (2, 3) aufweisen,
**dadurch gekennzeichnet, dass**
die Ventileinrichtung (1) einen Ventilkörper (4) umfasst, der ein separates Teil bildet und Pilz- bzw. Schirm-förmig ausgeformt ist, der aus einem Schirm (12) und einem Stab (11) besteht,
wobei der Ventilkörper (4) in einem gasdurchströmten Bereich in einer Trägerplatte (5) axial geführt ist und in einer geschlossenen Stellung mit seinem Schirm (12) auf der Trägerplatte (5) den gasdurchströmten Bereich abdichtend aufliegt, und
einen Endanschlag für eine geöffnete Stellung des Ventilkörpers (4) aufweist, der durch eine mit mindestens einer Durchströmöffnung versehene und dreidimensional verformte Stopper-Lage (9) gebildet ist.

2. Ventileinrichtung nach dem vorhergehenden Anspruch,
**dadurch gekennzeichnet, dass** eine Stopper-Lage (9) den Endanschlag für den Pilz- bzw. Schirm-förmigen Ventilkörper (4) in der geöffneten Stellung bildet und einen maximalen Ventilhub definiert.

3. Ventileinrichtung nach dem vorhergehenden Anspruch,
**dadurch gekennzeichnet, dass** der Pilz- bzw. Schirm-förmige Ventilkörper (4) über einen Stab (11) in einer Ausnehmung (6) der Trägerplatte (5) und/oder der Stopperlage (9) geführt ist.

4. Ventileinrichtung nach dem vorhergehenden Anspruch,
**dadurch gekennzeichnet, dass** die Trägerplatte (5) und/oder die Stopperlage (9) mindestens eine Ausnehmung (7, 8) für durchströmende Abgase und/oder eine Gleitlagerung als Führung des Stabs (11) aufweisen.

5. Ventileinrichtung nach einem der beiden vorhergehenden Ansprüche, **dadurch gekennzeichnet, dass** die mindestens eine Ausnehmung (7, 8) in der Trägerplatte (5) und der Stopper-Lage (9) in Strömungsrichtung der Abgase kongruent ausgebildet und fluchtend ausgerichtet ist.

6. Ventileinrichtung nach einem der vorhergehenden Ansprüche 2 - 5, **dadurch gekennzeichnet, dass** Stopper-Lage (9) und Trägerplatte (5) kraft-, form- und/oder stoffschlüssig miteinander verbunden sind.

7. Ventileinrichtung nach Anspruch 2, **dadurch gekennzeichnet, dass** Stopper-Lage (9) und Trägerplatte (5) als Dichtungen für die Flansche (2, 3) ausbildet sind.

8. Ventileinrichtung nach einem der vorhergehenden Ansprüche, **dadurch gekennzeichnet, dass** eine Führung des Pilz- bzw. Schirm-förmigen Ventilkörpers (4) als Gleitlagerung in Form einer Gleithülse (10, 14) ausgebildet ist.

9. Ventileinrichtung nach einem der vorhergehenden Ansprüche, **dadurch gekennzeichnet, dass** eine Führung des Pilz- bzw. Schirm-förmigen Ventilkörpers (4) dadurch ausgebildet ist, dass ein an der Öffnung (7) in der Trägerplatte (5) anstehendes Material des betreffenden Blechteils (5, 9) zur Ausbildung einer axialen Führung (19) umgelegt und/oder tiefgezogen ist.

10. Ventileinrichtung nach einem der vorhergehenden Ansprüche 6 - 9, **dadurch gekennzeichnet, dass** die Ventileinrichtung (1) mindestens eine zusätzliche Dichtung (15, 16) für die Dichtfunktion zu den Flanschen (2, 3) aufweist.

11. Ventileinrichtung nach dem vorhergehenden Anspruch,
**dadurch gekennzeichnet, dass** die zusätzliche Dichtung (15, 16) als mit Stopper-Lage (9) und Trägerplatte (5) verbundene Metall-Sicken-Dichtung ausgeführt ist.

12. Ventileinrichtung nach einem der vorhergehenden Ansprüche, **dadurch gekennzeichnet, dass** der Pilz- bzw. Schirm-förmige Ventilkörper (4) als Spritzguss- oder Form-, Fräs- oder Drehteil ausgebildet ist, der aus einem thermisch belastbaren Material besteht.

13. Ventileinrichtung nach einem der vorhergehenden Ansprüche, **dadurch gekennzeichnet, dass** der Pilz- bzw. Schirm-förmige Ventilkörper (4) mit einem Stab (11) in Form eines hohlen, zylindrischen Stiels versehen ist, der an den Schirm (12) angrenzend Öffnungen (18) aufweist, die um einen Umfang des Stabs (11) verteilt angeordnet sind.

14. Ventileinrichtung für eine Abgas-Rückführung in einem Abgasstrang eines Kraftfahrzeugs, das mit einer Verbrennungskraftmaschine angetrieben ist, die zwischen Flanschen (2, 3) angeordnet ist,
**dadurch gekennzeichnet, dass**
die Ventileinrichtung (1) einen Ventilkörper (4) umfasst, der ein separates Teil bildet und Pilz- bzw. Schirm-förmig ausgeformt ist, der aus einem Schirm (12) und einem Stab (11) besteht, und
der Stab (11) in Form eines hohlen, zylindrischen Stiels versehen ist, der an den Schirm (12) angrenzend Öffnungen (18) aufweist, die um einen Umfang des Stabs (11) verteilt angeordnet sind,
wobei der Ventilkörper (4) in einem gasdurchströmten Bereich in einer Trägerplatte (5) axial geführt ist und in einer geschlossenen Stellung mit seinem Schirm (12) auf der Trägerplatte (5) den gasdurchströmten Bereich abdichtend aufliegt, und
der Stab (11) mindestens eine Rastnase (20) oder einen Kragen an einem freien Ende (21) aufweist, die mit einer axialen Führung (19) zusammen einen maximalen Hub (h) des Ventilkörpers (4) definiert.

15. Ventileinrichtung nach Anspruch 14, **dadurch gekennzeichnet, dass** die Trägerplatte (5) doppelt ausgeführt ist und ein anstehendes Material der Blechteile (5, 5) zur Ausbildung einer axialen Führung (19) spiegelbildlich tiefgezogen ist.

## Claims

1. Valve arrangement for exhaust gas recirculation in an exhaust gas train of a motor vehicle which is driven by an internal combustion engine, a support plate (5) and a stopper position (9) having recesses corresponding to a screw hole (13) in end flanges (2, 3),
**characterized in that**
the valve arrangement (1) comprises a valve body (4) which forms a separate part and is shaped in the form of a mushroom or umbrella, which consists of an umbrella (12) and a rod (11),
wherein the valve body (4) is axially guided in a gas-flow-through region in a support plate (5) and, in a closed position, rests with its screen (12) on the support plate (5), sealing off the gas-flow-through region, and
has an end stop for an open position of the valve body (4), which is formed by a three-dimensionally deformed stopper layer (9) provided with at least one through-flow opening.

2. Valve arrangement according to the preceding claim, **characterized in that** a stopper position (9) forms the end stop for the mushroom or umbrella-shaped valve body (4) in the open position and defines a maximum valve stroke.

3. Valve arrangement according to the preceding claim, **characterized in that** the mushroom- or umbrella-shaped valve body (4) is guided via a rod (11) in a recess (6) of the carrier plate (5) and/or the stopper position (9).

4. Valve arrangement according to the preceding claim, **characterized in that** the carrier plate (5) and/or the stopper layer (9) have at least one recess (7, 8) for exhaust gases flowing through and/or a sliding bearing as a guide for the rod (11).

5. Valve arrangement according to one of the two preceding claims, **characterized in that** the at least one recess (7, 8) in the carrier plate (5) and the stopper layer (9) is formed congruently in the direction of flow of the exhaust gases and is aligned.

6. Valve arrangement according to one of the preceding claims 2 - 5, **characterized in that** the stopper layer (9) and the carrier plate (5) are connected to one another in a force-fitting, form-fitting and/or material-fitting manner.

7. Valve arrangement according to claim 2, **characterized in that** the stopper layer (9) and carrier plate (5) are formed as seals for the flanges (2, 3).

8. Valve arrangement according to one of the preceding claims, **characterized in that** a guide of the mushroom-shaped or umbrella-shaped valve body (4) is designed as a sliding bearing in the form of a sliding sleeve (10, 14).

9. Valve arrangement according to one of the preceding claims, **characterized in that** a guide of the mushroom- or umbrella-shaped valve body (4) is designed **in that** a material of the relevant sheet metal part (5, 9) which is present at the opening (7) in the carrier plate (5) is folded over and/or deep-drawn to form an axial guide (19).

10. Valve arrangement according to one of the preceding claims 6 - 9, **characterized in that** the valve arrangement (1) has at least one additional seal (15, 16) for the sealing function to the flanges (2, 3).

11. Valve arrangement according to the preceding claim, **characterized in that** the additional seal (15, 16) is designed as a metal bead seal connected to the stopper layer (9) and carrier plate (5).

12. Valve arrangement according to one of the preceding claims, **characterized in that** the mushroom- or umbrella-shaped valve body (4) is designed as an injection-moulded or moulded, milled or turned part which consists of a thermally resilient material.

13. Valve arrangement according to one of the preceding claims, **characterized in that** the mushroom- or umbrella-shaped valve body (4) is provided with a rod (11) in the form of a hollow, cylindrical stem, which has openings (18) adjacent to the umbrella (12), which are arranged distributed around a circumference of the rod (11).

14. Valve arrangement for exhaust gas recirculation in an exhaust gas train of a motor vehicle which is driven by an internal combustion engine arranged between flanges (2, 3),
**characterized in that**
the valve arrangement (1) comprises a valve body (4) which forms a separate part and is shaped in the form of a mushroom or umbrella, which consists of an umbrella (12) and a rod (11), and
the rod (11) is provided in the form of a hollow, cylindrical stem, which has openings (18) adjacent to the screen (12), which are arranged distributed around a circumference of the rod (11),
the valve body (4) being axially guided in a gas-flow-through region in a support plate (5) and, in a closed position, resting with its screen (12) on the support plate (5) in such a way as to seal off the gas-flow-through region, and
the rod (11) has at least one latching lug (20) or a collar at a free end (21), which together with an axial guide (19) defines a maximum stroke (h) of the valve body (4).

15. Valve arrangement according to claim 14, **characterized in that** the carrier plate (5) is of double design and an adjacent material of the sheet metal parts (5, 5) is deep-drawn in mirror image to form an axial guide (19).

## Revendications

1. Agencement de soupape pour la recirculation des gaz d'échappement dans un train de gaz d'échappement d'un véhicule automobile entraîné par un moteur à combustion interne, présentant une plaque de support (5) et une couche d'arrêt (9) présentant des évidements correspondant à un trou de vis (13) dans des brides d'extrémité (2, 3),
**caractérisé par le fait que**
l'agencement de soupape (1) comprend un corps de soupape (4) qui constitue une pièce séparée et qui a la forme d'un corps de champignon ou d'un parapluie, composé d'un parapluie (12) et d'une tige (11),
dans lequel le corps de soupape (4) est guidé axialement dans une zone de passage de gaz dans une plaque de support (5) et, dans une position fermée, repose avec son parapluie (12) sur la plaque de support (5), fermant la zone de passage de gaz, et
possède une butée pour une position ouverte du corps de soupape (4), qui est formée par une couche d'arrêt (9) déformée en trois dimensions et pourvue d'au moins une ouverture de passage.

2. Dispositif de soupape selon la revendication précédente, **caractérisé en ce qu'**une couche d'arrêt (9) forme la butée du corps de soupape (4) en forme de champignon ou de parapluie en position ouverte et définit une course maximale de la soupape.

3. Dispositif de soupape selon la revendication précédente, **caractérisé en ce que** le corps de soupape en forme de champignon ou de parapluie (4) est guidé par une tige (11) dans une cavité (6) de la plaque de support (5) et/ou dans la couche d'arrêt (9).

4. Dispositif de soupape selon la revendication précédente, **caractérisé par le fait que** la plaque de support (5) et/ou la couche d'arrêt (9) présentent au moins un renfoncement (7, 8) pour l'écoulement des gaz d'échappement et/ou un palier lisse comme guide pour la tige (11).

5. Dispositif de soupape selon l'une des deux revendications précédentes, **caractérisé par le fait que** l'au moins un renfoncement (7, 8) dans la plaque de support (5) et la couche d'arrêt (9) est formée de manière congruente dans la direction d'écoulement des gaz d'échappement et est alignée.

6. Agencement de soupape selon l'une des revendications précédentes 2 - 5, **caractérisé par le fait que** la couche d'obturation (9) et la plaque de support (5) sont reliées l'une à l'autre de manière à s'adapter à la force, à la forme et/ou au matériau.

7. Agencement de soupape selon la revendication 2, **caractérisé par le fait que** la couche d'arrêt (9) et la plaque de support (5) sont formées comme des joints pour les brides (2, 3).

8. Agencement de soupape selon l'une des revendications précédentes, **caractérisé par le fait qu'**un guidage du corps de soupape (4) en forme de champignon ou de parapluie est conçu comme un palier de glissement sous la forme d'un manchon de glissement (10, 14).

9. Agencement de soupape selon l'une des revendications précédentes, **caractérisé en ce qu'**un guidage du corps de soupape (4) en forme de champignon ou de parapluie est conçu **en ce qu'**un matériau de la pièce de tôle concernée (5, 9) qui se trouve au niveau du renfoncement (7) dans la plaque de support (5) est replié et/ou embouti pour former un guidage axial (19).

10. Agencement de soupape selon l'une des revendications précédentes 6 - 9, **caractérisé par le fait que** l'agencement de soupape (1) comporte au moins un joint supplémentaire (15, 16) pour la fonction d'étanchéité des brides (2, 3).

11. Agencement de soupape selon la revendication précédente, **caractérisé en ce que** le joint supplémentaire (15, 16) est conçu comme un joint à billes métalliques relié à la couche de bouchon (9) et à la plaque de support (5).

12. Agencement de soupape selon l'une des revendications précédentes, **caractérisé en ce que** le corps de soupape (4) en forme de champignon ou de parapluie est conçu comme une pièce moulée par injection ou moulée, fraisée ou tournée qui est constituée d'un matériau thermiquement résistant.

13. Agencement de soupape selon l'une des revendications précédentes, **caractérisé en ce que** le corps de soupape (4) en forme de champignon ou de parapluie est pourvu d'une tige (11) en forme de tige cylindrique creuse, qui présente des ouvertures (18) adjacentes au parapluie (12), qui sont réparties autour de la circonférence de la tige (11).

14. Agencement de soupape pour la recirculation des gaz d'échappement dans un train de gaz d'échappement d'un véhicule automobile entraîné par un moteur à combustion interne, disposé entre des brides (2, 3),
**caractérisé par le fait que**
l'agencement de soupape (1) comprend un corps de soupape (4) qui constitue une partie distincte et qui a la forme d'une salle de musculation ou d'un parapluie, composé d'un parapluie (12) et d'une tige (11), et
la tige (11) se présente sous la forme d'une tige creuse, cylindrique, qui présente des ouvertures (18) adjacentes à l'écran (12), réparties sur la circonférence de la tige (11),
le corps de soupape (4) est guidé axialement dans une zone de passage de gaz dans une plaque de support (5) et, en position fermée, repose avec son écran (12) sur la plaque de support (5) de manière à fermer hermétiquement la zone de passage de gaz, et
la tige (11) comporte au moins un ergot de verrouillage (20) ou un collier à une extrémité libre (21) qui, avec un guide axial (19), définit une course maximale (h) du corps de soupape (4).

15. Agencement de vanne selon la revendication 14, **caractérisé par le fait que** la plaque de support (5) est de conception double et qu'un matériau adjacent des pièces de tôle (5, 5) est embouti en image miroir pour former un guide axial (19).
